# EUROPÄISCHE PATENTSCHRIFT

(11) **EP 3 489 542 B1**
(45) Veröffentlichungstag und Bekanntmachung des Hinweises auf die Patenterteilung: **11.06.2025**
(21) Anmeldenummer: 18204626.8
(22) Anmeldetag: 06.11.2018
(51) Int. Cl.: F16F 7/108

(54) **KFZ-SCHWINGUNGSTILGER**
MOTOR VEHICLE VIBRATION DAMPER
AMORTISSEUR D'OSCILLATIONS POUR VÉHICULE AUTOMOBILE

(30) Priorität: 24.11.2017 DE 102017127840
(43) Veröffentlichungstag der Anmeldung: 29.05.2019
(73) Patentinhaber: VORWERK AUTOTEC GmbH & Co. KG, 42287 Wuppertal (DE)
(72) Erfinder: Frenk, Jacob, 44269 Dortmund (DE)
(74) Vertreter: Lippert Stachow Patentanwälte Rechtsanwälte

(56) Entgegenhaltungen:
- JP-A- 2006 029 549
- JP-A- H0 337 447
- JP-A- H09 184 538
- KR-A- 20160 142 577
- US-A- 3 774 730

## Beschreibung

Die Erfindung betrifft einen Schwingungstilger, insbesondere für eine Kfz-Heckklappe, mit einem Trägerelement, das über eine Elastomer-Einrichtung mit einem Tilgerkörper elastisch gekoppelt ist, sowie ein Verfahren zur Montage eines derartigen Schwingungstilgers.

Schwingungstilger, auch als Schwingungsdämpfer bezeichnet, sind sogenannte frequenzabgestimmte Resonanzdämpfer und werden insbesondere auf dem Gebie1t von Kraftfahrzeugen zur Reduzierung von Bewegungen vorgegebener Bauteile, beispielsweise hervorgerufen durch die Einwirkung von Betriebskräften auf das Bauteil, eingesetzt. Diese passiv arbeitenden Vorrichtungen wirken Bewegungen bzw. Schwingungen an und/oder im Bauteil mittels einer phasenverschobenen Bewegung einer durch den Tilgerkörper bereitgestellten Tilgermasse entgegen. Ein solcher Schwingungstilger kann spezifisch auf die Anregungsfrequenz des jeweiligen Bauteils angepasst werden.

Die Offenlegungsschrift JP 2006 029549 A betrifft einen Schwingungstilger mit einem langestreckten Tilgerkörper, welcher über eine Elastomereinrichtung mit zwei Halteelementen elastisch gekoppelt ist. Die Elastomereinrichtung umfasst zwei Elastomerkörper, welche jeweils einen kappenartigen Abschnitt aufweisen, der einen zugeordneten Endabschnitt des Tilgerkörpers umgreift. Die Halteelemente sind zur Befestigung an einem Bauteil ausgebildet und weisen eine Aufnahme zur Befestigung jeweils eines dem Halteelement zugeordneten Elastomerkörpers auf.

Die Offenlegungsschrift US 3 774 730 A betrifft einen Werkzeughalter, der einen Hohlraum aufweist, in welchem ein Schwingungstilger eingeschlossen ist. Dieser Schwingungstilger stützt sich über zwei Elastomerkörper in Form zweier O-Ringe an Innenwandabschnitten der Werkzeughalter elastisch ab.

Die Offenlegungsschrift KR 2016 0142577 A beschreibt einen Schwingungstilger mit einem langestreckten Tilgerkörper, welcher über zwei Elastomerkörper stirnseitig mit einem Trägerelement elastisch gekoppelt ist, wobei das Trägerelement zur Befestigung an einem Bauteil ausgebildet ist.

Die Offenlegungsschrift JP-H-09184538 A beschreibt einen Schwingungstilger mit einer langgestreckten Tilgermasse, an deren beiden Stirnseiten jeweils ein elastisches Element befestigt ist. Die elastischen Elemente weisen eine Befestigungsnut auf, in die ein Schenkel einer dem jeweiligen elastischen Element zugeordnete, L-förmige Befestigungsplatte eingreift, wobei der andere Schenkel der Befestigungsplatte mittels einer Verschraubung an der zu dämpfenden Vorrichtung befestigt ist. Die Offenlegungsschrift JP-H-0337447 A betrifft einen Schwingungstilger mit einem langgestreckten Tilgerkörper, an dessen beiden Stirnseiten jeweils ein Elastomerkörperelement befestigt ist, das selbst jeweils an einem Halteelement anvulkanisiert ist, das an der zu dämpfenden Vorrichtung befestigbar, beispielsweise anschraubbar ist.

Der Erfindung liegt die Aufgabe zugrunde, einen Schwingungstilger bereitzustellen, welcher kostengünstig herstellbar bzw. montierbar und in Bezug auf sein Frequenzverhalten leicht skalierbar, d.h. einstellbar bzw. anpassbar ist, sodass der prinzipielle Aufbau insbesondere im Bereich von Kraftfahrzeugen leicht auf die spezifischen jeweiligen Gegebenheiten einstellbar ist. Diese Aufgabe löst die Erfindung vorrichtungsseitig mit einem Schwingungstilger umfassend die Merkmale von Anspruch 1. Der erfindungsgemäße Schwingungstilger umfasst einen langgestreckten Tilgerkörper, an dessen Endabschnitten jeweils ein Elastomerkörper mit einem zum Tilgerkörper offenen, kappenartigen Abschnitt angeordnet ist, mit welchem der jeweilige Elastomerkörper den Tilgerkörper übergreift. Der erfindungsgemäße Schwingungstilger zeichnet sich dadurch aus, dass das Trägerelement beabstandete Aufnahmen zur jeweiligen Aufnahme eines der Elastomerkörper aufweist, und wobei jeweils ein Einspannelement vorgesehen ist zum Einspannen des jeweiligen Elastomerkörpers in der zugeordneten Aufnahme des Trägerelements.

Der erfindungsgemäße Schwingungstilger zeichnet sich zum einen durch einen einfachen Aufbau aus, der mit dem Tilgerkörper, zumindest zwei Elastomerkörper sowie einem Trägerelement in einer Ausführungsform vergleichsweise wenige Bauteile aufweisen kann, was zum einen die Herstellung als auch den Zusammenbau bzw. die Montage vereinfachen kann. Darüber hinaus ist der erfindungsgemäße Schwingungstilger ohne großen Aufwand skalierbar, beispielsweise durch Verändern der Masse des Tilgerkörpers, ohne dass grundsätzliche Konstruktionsmerkmale wie die konstruktive Gestaltung der Verbindung von Tilgerkörper und Elastomerkörper bei einer Anpassung der Resonanzfrequenz geändert werden müssen. Darüber hinaus kann durch Ändern der elastischen Eigenschaften des Elastomerkörpers Einfluss auf die jeweilige Resonanzfrequenz genommen werden ohne die Gestalt der Bauteile verändern zu müssen. Der erfindungsgemäße Schwingungstilger ist darüber hinaus auf einfache Weise an ein zu dämpfendes Bauteil ankoppelbar, beispielsweise durch Befestigung des Trägerelements an das Bauelement, dessen Bewegung mittel s einer phasenverschobenen Bewegung des Tilgerkörpers entgegengewirkt wird.

Der erfindungsgemäße Schwingungstilger kann auf einer Vielzahl von technischen Gebieten eingesetzt werden, insbesondere auf dem Gebiet von Kraft- und Nutzfahrzeugen. Beispielsweise kann der erfindungsgemäße Schwingungstilger an Türen und/oder Klappen von Kraft-und Nutzfahrzeugen, jedoch auch an Achsen, am bzw. im Cockpit oder an Anbaukomponenten bzw. -teilen von Fahrzeugen eingesetzt werden.

Weiterbildungen der Erfindung und weitere erfindungsgemäße Merkmale sind in der allgemeinen Beschreibung, den Zeichnungen, der Figurenbeschreibung sowie den Unteransprüchen angegeben.

In einer Ausführungsform kann der bzw. die Elastomerkörper vollständig aus einem Elastomermaterial hergestellt sein. In einer anderen Ausführungsform kann auch vorgesehen sein, stabile oder starre Einlagen zur Steuerung der Kennlinie des Elastomerkörpers, insbesondere auch richtungsabhängig, in den Elastomerkörper zu integrieren.

Vorzugsweise kann vorgesehen sein, dass der kappenartige Abschnitt eines Elastomerkörpers umfänglich zur Längsachse des Tilgerkörpers geschlossen ist, sodass der kappenartige Abschnitt den Tilgerkörper im jeweiligen Bereich vollständig umschließt, sodass unabhängig von der Richtung auftretender Betriebskräfte ein Kraftschluss, Formschluss oder Stoffschluss zwischen dem jeweiligen Elastomerkörper und dem Tilgerkörper bereitgestellt werden kann.

Die Angabe "kappenartiger Abschnitt" ist breit zu verstehen und kann beispielsweise eine topfartige Aufnahme aufweisen, die beispielsweise zylinderförmig oder konusförmig gestaltet sein kann. Die Verbindung zwischen dem Elastomerkörper innerhalb des kappenartigen Abschnittes und des Tilgerkörpers kann je nach Ausführungsform kraftschlüssig oder stoffschlüssig ausgeführt sein. In der letztgenannten Ausführungsform kann der jeweilige Elastomerkörper beispielsweise an einen vorgegebenen Längsendabschnitt des Tilgerkörpers anvulkanisiert sein, oder im Falle einer kraftschlüssigen Ankopplung z.B. unter Vorspannung auf den Tilgerkörper aufgespannt und diesen zumindest abschnittsweise übergreifend angeordnet sein.

Der erfindungsgemäße langgestreckte Tilgerkörper kann in seiner Längserstreckung, d.h. in Längsrichtung, die größte Abmessung aufweisen, d.h. die Stirnseitenmaße sind in dieser Ausführungsform kleiner, in der Regel zumindest um den Faktor zwei kleiner im Vergleich zu seiner Längserstreckung.

Die Angabe "beabstandete Aufnahmen des Trägerelements" kann in einer Vielzahl von Ausprägungen bzw. Ausbildungen gestaltet sein, beispielsweise als U-oder V-förmige Flansche, welche den jeweiligen Elastomerkörper umgreifen können.

In einer besonderen Ausführungsform kann insbesondere vorgesehen sein, die jeweilige Aufnahme des Trägerelements als Gabelaufnahme auszubilden, welche einer Befestigungsstruktur an dem jeweiligen Elastomerkörper zugeordnet ist, wobei eine einzelne dieser Gabelaufnahmen zwei Gabelschenkel aufweisen kann, zwischen welchen im zusammengesetzten Zustand des erfindungsgemäßen Schwingungstilgers jeweils ein Elastomerkörper angeordnet sein kann.

Die spezifische Gestaltung des Trägerelements des erfindungsgemäßen Schwingungstilgers kann an das Bauelement angepasst sein, dessen Bewegung durch die phasenverschobenen Bewegungen des Tilgerkörpers entgegengewirkt werden soll. Beispielsweise kann das Trägerelement einen U-förmigen Rahmen aufweisen, bei welchem die Aufnahmen, welche insbesondere als Gabelaufnahmen ausgebildet sein können, im Endbereich der Basis des U-förmigen Rahmens angeordnet sein können. Die Aufnahmen können in dieser Ausführungsform jeweils im Schenkelbereich des U-förmigen Rahmens angeordnet bzw. ausgebildet oder jeweils als ein Schenkel des U-förmigen Rahmens ausgebildet sein. In anderen Ausführungsformen kann auch vorgesehen sein, das Trägerelement integral an das in seiner Bewegung abzuschwächende Bauelement anzuformen, sodass der Tilgerkörper mit daran angebrachten Elastomerkörpern direkt an das in Bezug auf seine Bewegung abzuschwächende Bauelement montiert werden kann.

Es sei betont, dass in der vorliegenden Anmeldung die Angabe "Element" wie "Trägerelement" oder "Einspannelement" nicht nur ein einzelnes Bauteil meinen kann, sondern auch mehrere, zusammenfügbare Einzelbauteile aufweisen kann. Ferner ist es auch möglich, dass ein solches Element wie ein Trägerelement zusammen mit einem anderen Bauteil einen nicht zerstörungsfrei trennbaren Gegenstand bildet. Beispielsweise kann das Trägerelement, z.B. in Form einer Gabelaufnahme, und ausgebildet zur Aufnahme eines Verbundelements, umfassend einen Tilgerkörper und zumindest einen Elastomerkörper, integral mit dem in seiner Bewegung zu dämpfenden Bauteil wie einer Heckklappe eines KFZ hergestellt sein.

Insbesondere in solchen Ausführungsformen des erfindungsgemäßen Schwingungstilgers, bei welchem der Tilgerkörper langgestreckt ist und zwei sich über die Längserstreckung beabstandete Endabschnitte aufweist, kann der Tilgerkörper zylinderförmig mit zylinderförmigen Endabschnitten ausgebildet sein, auf welche zylinderförmige Kappenabschnitte eines jeweiligen Elastomerkörpers aufgesetzt sein können, sodass die kappenartigen Abschnitte die zylinderförmigen Endabschnitte des Tilgerkörpers übergreifen. Auf diese Weise kann ein Verbundelement gebildet sein, das in den Gabelaufnahmen des Trägerelements verspannbar ist. In einer Ausführungsform kann insofern der Tilgerkörper rotationssymmetrisch um seine Längsachse ausgebildet sein, in ähnlicher Weise kann der kappenartige Abschnitt des jeweiligen Elastomerkörpers rotationssymmetrisch ausgebildet sein, sodass die Innenmantelfläche des kappenartigen Abschnittes des Elastomerkörpers großflächig, insbesondere vollständig, an der Außenmantelfläche des zugeordneten Endabschnitts des Tilgerkörpers anliegen kann. In einer Ausführungsform kann zur Verbesserung des Kraftschlusses zwischen Elastomerkörper und Tilgerkörper vorgesehen sein, dass der Tilgerkörper im Bereich des Endabschnittes axial abgestufte Absätze aufweist, wobei die Innenmantelfläche des kappenartigen Abschnittes komplementär hierzu mit abgestuften Absätzen ausgebildet sein kann zur flächigen Anlage von Elastomerkörper und Tilgerkörper im Wesentlichen über den gesamten Längsabschnitt, innerhalb dessen der jeweilige Elastomerkörper den Tilgerkörper übergreift.

Zur Verbindung zwischen Elastomerkörper und Tilgerkörper kann eine rein kraftschlüssige Verbindung vorgesehen sein, beispielsweise dadurch, dass der kappenartige Abschnitt elastisch in radialer Richtung erweitert und über den zugeordneten Endabschnitt des Tilgerkörpers bewegt wird, sodass nach dem Aufheben der radialen Erweiterung des Elastomerkörpers dieser vollumfänglich und kraftschlüssig am Tilgerkörper im axialen Endabschnitt desselben anliegt. In einer weiteren Ausführungsform kann auch ein Stoffschluss zwischen dem Tilgerkörper und den Elastomerkörpern vorgesehen sein, beispielsweise durch Anvulkanisieren des Elastomerkörpers an den Tilgerkörper.

Zur Befestigung der Elastomerkörper an dem Trägerelement kann zweckmäßigerweise vorgesehen sein, dass sich an den kappenartigen Abschnitt des jeweiligen Elastomerkörpers an der in Einbaulage der Tilgermasse abgewandten Längsseite ein längsseitiger, insbesondere rotationssymmetrisch ausgebildeter Fortsatz anschließt, der eine jeweilige Befestigungsstruktur aufweist zum Einspannen des jeweiligen Elastomerkörpers in dem Trägerelement. In einer besonders einfachen Ausführungsform kann der Fortsatz beispielsweise zylinderförmig gestaltet sein und eine umfängliche Nut aufweisen zur Bereitstellung von mindestens einer radialen Einspannfläche durch den Nutgrund. Darüber hinaus kann die Befestigungsstruktur des jeweiligen Elastomerkörpers auch axiale Einspannflächen aufweisen, beispielsweise durch, über den Nutgrund verbundende und die Nut axial begrenzende axiale Einspannflächen. Es sei bemerkt, dass die in Bezug auf die Einspannflächen angegebenen Richtungen die jeweilige Normalenrichtung auf die jeweilige Einspannfläche bezeichnet.

Es kann vorgesehen sein, dass die besagten Einspann- bzw. Anlageflächen ausgebildet sind zur Wechselwirkung mit zugeordneten Einspannflächen am jeweiligen Einspannelement zum Einspannen des jeweiligen Elastomerkörpers in der zugeordneten Aufnahme, insbesondere einer Gabelaufnahme des Trägerelements.

Die Einspannelemente des erfindungsgemäßen Schwingungstilgers können jeweils eine Durchführung zur Bereitstellung einer insbesondere zylinderartigen, in radialer Richtung wirkenden Spannfläche zur Wechselwirkung mit einer zugeordneten Anlagefläche des Elastomerkörpers wie dem obenstehend beschriebenen Nutgrund einer Nut im Elastomerkörper und eine jeweilige Nutaufnahme zum Führen und zur Aufnehmen der beiden Gabelschenkel der Aufnahmegabel umfassen. Dabei kann vorgesehen sein, dass die Durchführung etwa mittig durch das jeweilige Einspannelement verläuft, wobei die Nutaufnahme hierzu radial außen, vorzugsweise an der Außenmantelfläche des jeweiligen Einspannelementes angeordnet sein kann.

In einer vorteilhaften Ausführungsform können die Einspannelemente schellenartig, insbesondere zweiteilig ausgebildet sein, wobei jedes der beiden Einspannelementteile einem Gabelschenkel der Gabelaufnahme des Trägerelements zugeordnet sein kann, an dem es befestigbar ist. Die Zweiteiligkeit der Einspannelemente ermöglicht eine einfache Montage, beispielsweise dadurch, dass zunächst eines der Einspannelementteile an der Gabelaufnahme befestigt wird, dann das Verbundelement zum Trägerelement orientiert und zum Schluss das bzw. die zweiten Einspannelementteile in der Gabelaufnahme befestigt werden zum Einspannen des jeweiligen Elastomerkörpers in der zugeordneten Aufnahme des Trägerelements. In einer anderen Ausführungsform kann auch eine Montage derart vorgesehen sein, bei welcher zunächst beide Einspannelemente am zugehörigen Elastomerkörper befestigt werden und danach das Verbundelement umfassend den Elastomerkörper mit montierten Einspannelementen zu den Gabelaufnahmen des Trägerelements so orientiert wird, dass bei einer nachfolgenden Relativbewegung von Trägerelement und Verbundelement senkrecht zur Längsachse des Tilgers die Gabelschenkel des Trägerelements in Nutaufnahmen der Einspannelemente eingreifen und von diesen beim Zusammenfügen geführt werden, insbesondere bis zu einer Verrastung von Gabelaufnahme und Einspannelement.

Um eine einfache Fixierung der Einspannelemente am jeweiligen Gabelschenkel der zugeordneten Gabelaufnahme bereitzustellen, kann vorgesehen sein, dass die Einspannelemente jeweils im Bereich der die Nutaufnahme festlegenden Begrenzungsfläche ein Rastelement aufweisen zum Verrasten mit einem am zugeordneten Gabelschenkel der Gabelaufnahme angeordneten Rastelement zur Befestigung jedes Einspannelementteils an dem zugeordneten Gabelschenkel. Das Vorsehen von komplementären Rastelementen ermöglicht das Inverbindungbringen der Einspannelemente mit der zugeordneten Gabelaufnahme in bestimmten Ausführungsformen werkzeuglos, was den Aufwand zum Zusammensetzen bzw. zum Montieren des erfindungsgemäßen Schwingungstilgers verringert bzw. erleichtern kann. Um das Ineingriffbringen der beiden komplementär ausgebildeten Rastelemente am Einspannelement bzw. am zugeordneten Gabelschenkel zu erleichtern, kann vorgesehen sein, dass eine die Nutaufnahme am Einspannelement festlegende und das Rastelement tragende Begrenzungsfläche im Bereich des Nutgrundes eine Ausnehmung aufweist. Diese gestalterische Maßnahme kann eine elastische Auslenkung der das Rastelement tragende Begrenzungsfläche für die Verrastung erleichtern, wobei sich die Ausnehmung vorzugsweise über die überwiegende Länge der Nut bzw. die Nutaufnahme erstrecken kann.

Das Trägerelement des erfindungsgemäßen Schwingungstilgers kann spezifisch an das in seiner Bewegung abzuschwächende Bauteil angepasst sein. Zur Befestigung an das Bauteil kann das Trägerelement an den Aufnahmen, insbesondere den beiden Gabelaufnahmen und etwa um 90° versetzt jeweils einen sich in Längsrichtung des Trägerelements und insbesondere über etwa die Tiefe der Gabelaufnahme erstreckenden Anlageflansch aufweisen zur starren Befestigung des Trägerelements an das besagte Bauteil. Dabei kann vorgesehen sein, dass bei dieser Ausführungsform im Bereich beider Aufnahmen jeweils ein Anlageflansch mit zugeordneten Anlageflächen vorgesehen ist, mit welchen das etwaige Element an das Bauelement starr befestigbar ist.

In einer anderen Ausführungsform kann auch vorgesehen sein, das Trägerelement des erfindungsgemäßen Schwingungstilgers wie in der obigen Ausführungsform wiederum U-förmig auszubilden, wobei die beiden beabstandeten Schenkel wiederum Gabelaufnahmen bereitstellen und die Befestigung des Trägerelements an dem in seiner Bewegung abzuschwächenden Bauteil jedoch an der Basis des Trägerelements durchgeführt wird, beispielsweise dadurch, dass das Trägerelement mit einer Anlagefläche der Basis an dem Bauelement anliegt und mit diesem verbindbar, beispielsweise starr verschraubbar ist. In einer weiteren Ausführungsform kann auch vorgehen sein, dass das Trägerelement integral mit dem in seiner Bewegung abzuschwächenden Bauteil aufgebaut bzw. gestaltet ist.

Zweckmäßigerweise kann der Tilgerkörper ein Metallmaterial aufweisen während die Spannelemente ein Kunststoffmaterial umfassen können, das vorzugsweise durch Spritzgießen zum Herstellen der Spannelemente verarbeitet werden kann.

Die der Erfindung zugrunde liegende Aufgabe wird verfahrensseitig durch ein Verfahren zur Montage eines Schwingungstilgers gelöst, das die folgenden Schritte aufweist:
- Bereitstellen eines langgestreckten Tilgerkörpers mit zwei Längsendabschnitten;
- Bereitstellen zweier Elastomerkörper umfassend jeweils einen kappenartigen Abschnitt;
- Befestigen der Elastomerkörper an den Tilgerkörper, sodass ein Verbundelement umfassend den Tilgerkörper und die beiden daran befestigten Elastomerkörper bereitgestellt ist;
- Bereitstellen eines, insbesondere U-förmigen, Trägerelements mit zwei etwa senkrecht von einem Basisabschnitt und beabstandet zueinander sich erstreckenden Aufnahmegabeln;
- Bereitstellen zweier, jeweils zweiteiliger Einspannelemente;
- Einspannen des Verbundelements in den Gabelaufnahmen des Trägerelements unter Verwendung der beiden Einspannelemente, sodass die Gabelaufnahmen an den jeweiligen Einspannelementen und diese jeweils kraftbeaufschlagt an dem jeweiligen Elastomerkörper zur Bereitstellung eines Presssitzes des Verbundelementes in den Gabelaufnahmen der Tragelementes anliegen;
wobei der Schritt des Befestigens der Elastomerkörper an den Tilgerkörper, die Schritte umfasst:
- jeweiliges elastisches Erweitern des kappenartigen Abschnitts der beiden Elastomerkörper in radialer Richtung und Aufziehen des kappenartigen Abschnitts des jeweiligen Elastomerkörpers auf einen diesem zugeordneten Längsendabschnitt der Tilgermassse, derart, dass der jeweilige Elastomerkörper den zugeordneten Längsendabschnitt des Tilgerkörpers übergreift.

Vorzugsweise wird mit dem Einspannen des Verbundelements in den Gabelaufnahmen des Trägerelements ein Presssitz sowohl in Längs- als auch in Radialrichtung bereitgestellt, sodass die Elastomerkörper axial und radial vorgespannt mit dem Trägerelement verbunden sind.

Die Erfindung wird im Folgenden durch das Beschreiben einer Ausführungsform einschließlich Varianten unter Bezugnahme auf die beiliegenden Figuren erläutert, wobei
- Figur 1: eine beispielhafte Ausführungsform eines erfindungsgemäßen Schwingungstilgers in einer Schrägansicht,
- Figur 2: den in Figur 1 angegebenen Schwingungstilger in einer Explosionsdarstellung,
- Figur 3: das Trägerelement des erfindungsgemäßen Schwingungstilgers der Figuren 1, 2 in einer perspektivischen Einzeldarstellung,
- Figur 4a: den Tilgerkörper des erfindungsgemäßen Schwingungstilgers der Figuren 1, 2 in einer Schrägansicht,
- Figur 4b: den Tilgerkörper gemäß Figur 4a in einer Stirnseitenansicht,
- Figur 5a: einen in dem erfindungsgemäßen Schwingungstilger der Figuren 1, 2 eingesetzten Elastomerkörper in einer ersten perspektivischen Ansicht,
- Figur 5b: den Elastomerkörper der Figur 5a in einer zweiten perspektivischen Ansicht,
- Figur 6a: das Einspannelement zur Verwendung im erfindungsgemäßen Schwingungstilger der Figuren 1, 2 in einem geschlossenen Zustand in einer perspektivischen Ansicht,
- Figur 6b: das Einspannelement der Fig. 6a in einem geöffneten Zustand in einer perspektivischen Ansicht,
- Figur 6c: das geöffnete Einspannelement der Figur 6a in einer Unteransicht,
- Figur 7: das Trägerelement mit angebrachten Einspannelementen des erfindungsgemäßen Schwingungstilger der Figuren 1, 2, und
- Figur 8: den erfindungsgemäßen Schwingungstilger gemäß Figuren 1, 2 in einer perspektivischen Rückansicht zeigt.

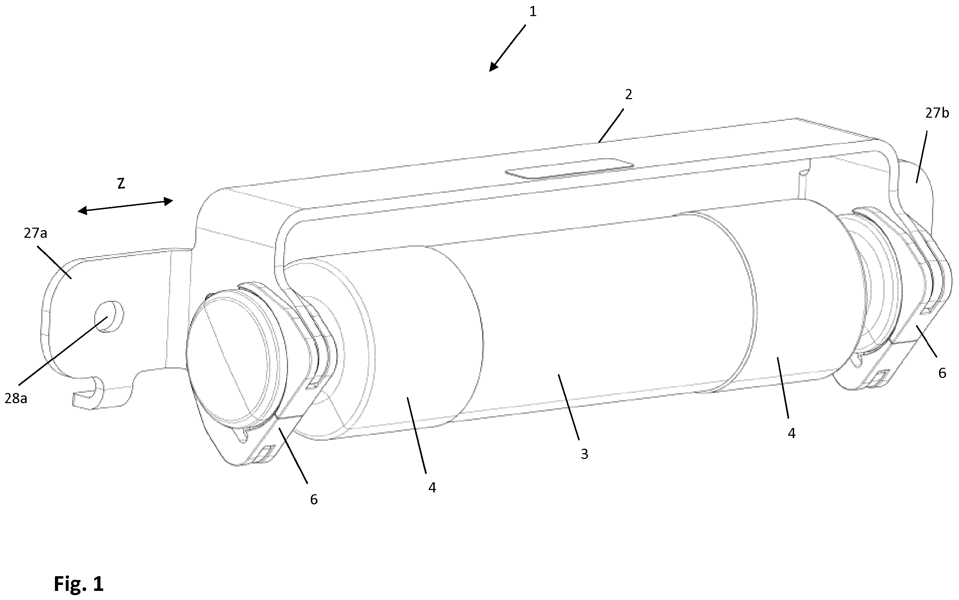

Der in Figur 1 dargestellte Schwingungstilger 1 ist als Schwingungsdämpfer für eine Kraftfahrzeugheckklappe ausgebildet und weist ein Trägerelement 2 auf, das mittels Befestigungslaschen 27 a, b an die Kfz-Heckklappe starr verbindbar. Hierzu weisen die Befestigungslaschen 27a, b in der beschriebenen Ausführungsform Bohrungen 28a auf, über welcher der Schwingungstilger 1 an die Kfz-Heckklappe verschraubbar ist. Der erfindungsgemäße Schwingungstilger 1 ist als frequenzabgestimmter Resonanzdämpfer ausgebildet, der einen elastisch aufgehängten Tilgerkörper 3 mit einer vorgegebenen Tilgermasse aufweist, um den durch Betriebskräfte verursachte Schwingungen der Heckklappe mittels einer phasenverschobenen Bewegung des Tilgerkörpers entgegenzuwirken. In der Figur ist die Bewegung des zu dämpfenden Bauteils, d.h. der Kfz-Heckklappe mit dem Bezugszeichen Z angedeutet. Der erfindungsgemäße Schwingungstilger 1 umfasst einen hier zylinderförmigen Tilgerkörper 3, an dessen Stirnseiten jeweils ein Elastomerkörper 4 befestigt ist, welcher wiederum selbst über Einspannelemente 6 mit dem Trägerelement 2 spielfrei verbunden ist.

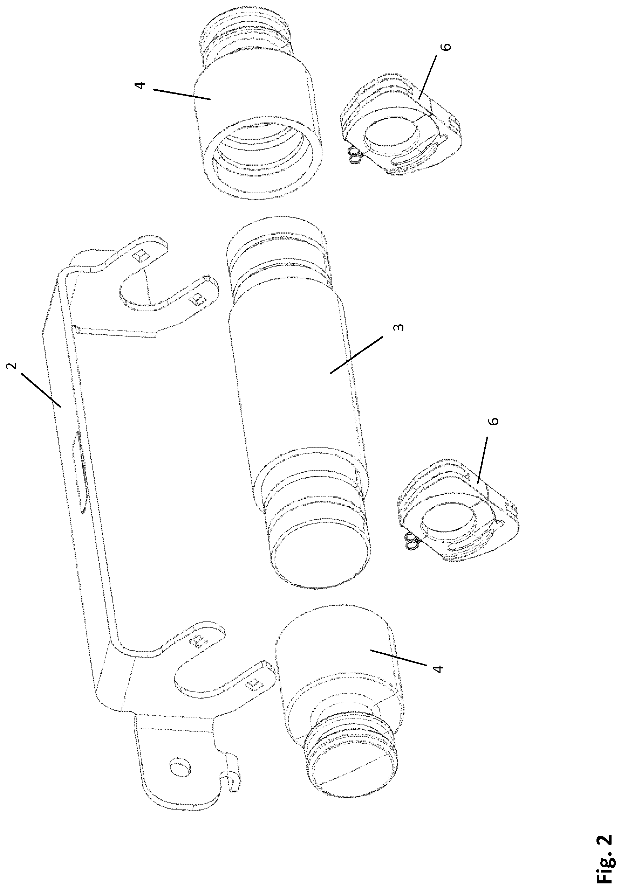

Figur 2 zeigt den Aufbau des erfindungsgemäßen Schwingungstilgers der Figur 1 in einer Explosionsdarstellung. Erkennbar weisen die identisch aufgebauten Elastomerkörper 4 eine topfförmige Aufnahme auf, mit welcher sie den Tilgerkörper 3 an einer jeweiligen Stirnseite übergreifen. Dabei sind die Elastomerkörper im Bereich eines axialen Fortsatzes jeweils mit einem Einspannelement in Eingriff gebracht, das selbst in eine jeweilige Gabelaufnahme des Trägerelements 2 zum Einspannen des Verbundelements, umfassend den Tilgerkörper sowie die beiden endseitig aufgesetzten Elastomerkörper, eingesetzt ist. Je nach Ausführungsform sind die Elastomerkörper 4 über die Einspannelemente 6 sowohl in radialer als auch axialer Richtung vorgespannt am Trägerelement 2 befestigt.

Der in den Figuren 1, 2 angegebene erfindungsgemäße Schwingungstilger ist durch einfache Maßnahmen anpassbar bzw. skalierbar. Beispielsweise kann eine Frequenzabstimmung des erfindungsgemäßen Resonanzdämpfers durch Gewichtsveränderung des Tilgerkörpers insbesondere im Mittenbereich erfolgen, sodass keinerlei Änderungen an anderen Bauteilen des Schwingungstilgers 1 notwendig sind. In ähnlicher Weise kann eine Frequenzabstimmung auch durch Änderung der elastischen Eigenschaften der Elastomerkörper 4 erreicht werden, beispielsweise durch Materialänderungen, ohne dass die Geometrie der Bauteile verändert werden muss.

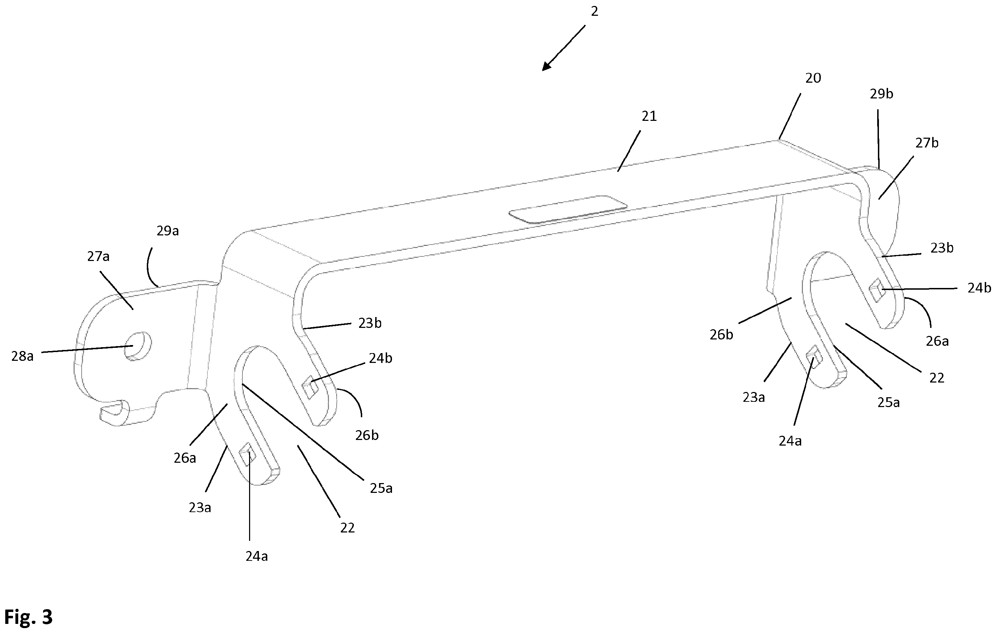

Figur 3 zeigt das Trägerelement 2 des erfindungsgemäßen Schwingungstilgers in einer perspektivischen Einzeldarstellung. In der beschriebenen Ausführungsform ist das Trägerelement 2 im Wesentlichen U-förmig mit einem sich in Längsrichtung erstreckenden Grundsteg 21, wobei sich an dessen Enden um 90° abgewinkelten Gabelaufnahmen 22 anschließen. Diese Gabelaufnahmen werden jeweils gebildet durch zwei beabstandete Gabelschenkel 23a, 23 b, die im Bereich ihrer freien Enden jeweils eine Rastausnehmung 24a, b aufweisen, deren Funktion untenstehend erläutert wird. Das Trägerelement 2 ist als Umformblech 20 ausgebildet, wobei die jeweilige Gabelaufnahme 22 durch die Gestaltung einer Ausnehmung in einem sich an den Grundsteg anschließenden Gabelflansch gestaltet ist, der eine äußere Stirnfläche 26a sowie eine innere Stirnfläche 26b bereitstellt. Die jeweilige Gabelaufnahme 22 ist durch eine Schmalfläche 25a beschränkt bzw. festgelegt. Im Bereich des Gabelflansches erstreckt sich etwa senkrecht zu dessen Außenfläche 26a in Längsrichtung des Trägerelements 2 zu beiden Seiten jeweils ein Befestigungsflansch 27a, 27b, mit einer in Figur 3 verdeckten Anlagefläche 29a, b zur Anlage und Befestigung über die Bohrung 28a an dem in seiner Bewegung zu dämpfenden Bauteil, hier einer nicht dargestellten Kfz-Heckklappe.

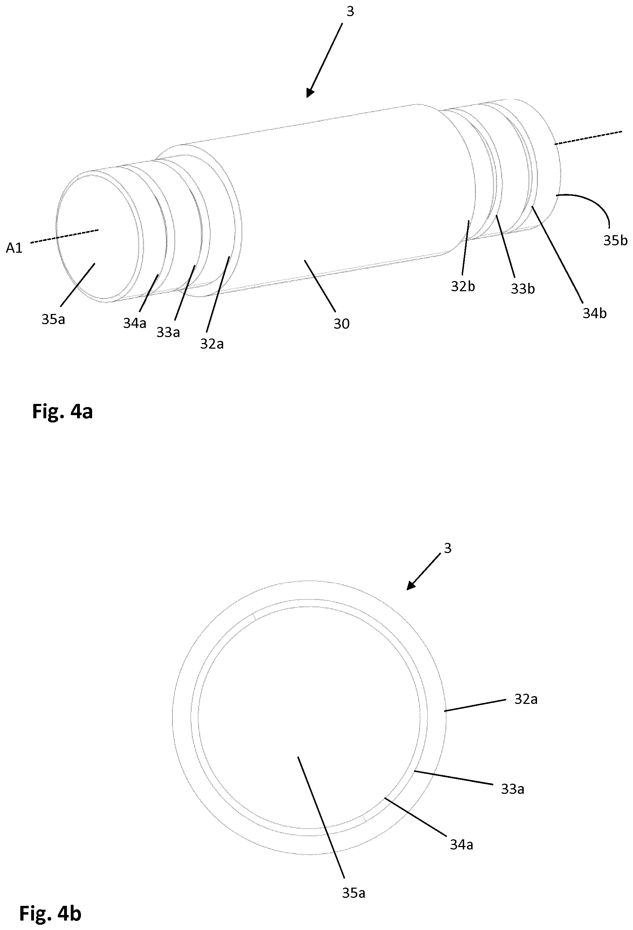

Die Figuren 4a, b zeigen in einer Einzeldarstellung den Aufbau des Tilgerkörpers 3 zur Bereitstellung der Tilgermasse in einer Schrägansicht in Figur 4a sowie einer frontalen Stirnseitenansicht in Figur 4b. In der beschriebenen Ausführungsform ist der Tilgerkörper aus einem Metallwerkstoff hergestellt und in einem Mittenabschnitt 30 zylinderförmig gestaltet, ferner weist er an seinen beiden in Längsrichtung zur Achse A1 angeordneten Endabschnitten mehrere radiale Abstufungen 32a, 33a, 34a sowie auf der gegenüberliegenden Seite die entsprechenden Abstufungen 32b, 33b, 34b auf. In einer nicht dargestellten Ausführungsform kann der Tilgerkörper insbesondere im Mittenbereich 30 Ausnehmungen umfassen, in die bei Bedarf Teilmassen einsetzbar sind zur Frequenzanpassung des Schwingungstilgers. Diese Zusatzmassen können je nach Ausführungsform in den Tilgerkörper eingeklemmt oder auch stoffschlüssig mit diesem, beispielsweise durch Verkleben, verbunden werden. Die axiale Erstreckung des Tilgerkörpers 3 ausgehend von der ersten radialen Abstufung 32a, 32b bis zur jeweiligen Stirnfläche 35a, 35b bestimmt den jeweiligen Endabschnitt des Tilgerkörpers, an welchem in noch zu beschreibender Art ein jeweiliger Elastomerkörper befestigbar ist.

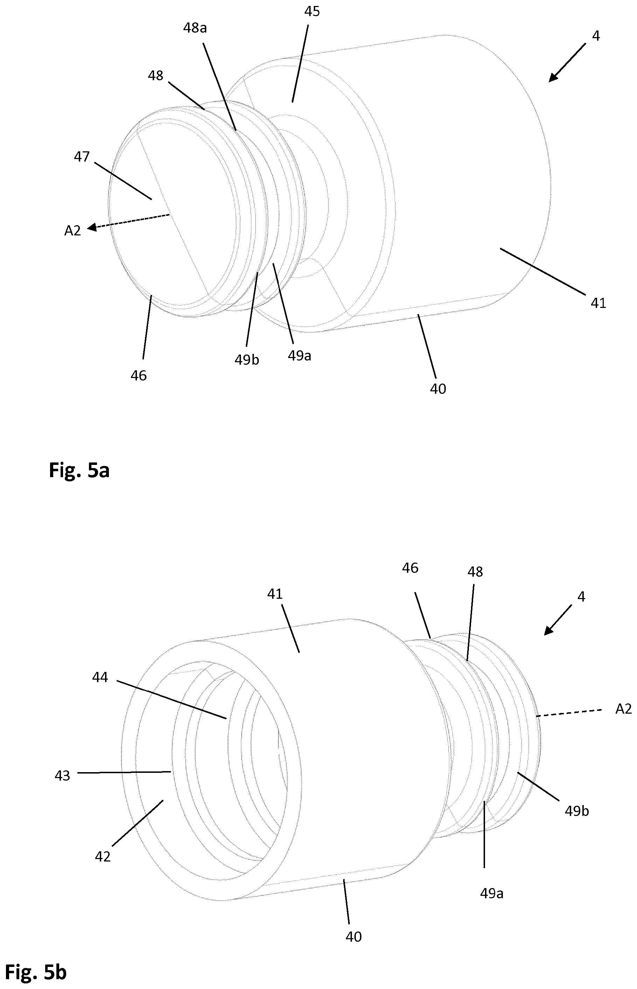

Dieser Elastomerkörper 4 ist in zwei unterschiedlichen perspektivischen Ansichten in den Figuren 5a und 5b gezeigt. Dieser weist einen einseitig geschlossenen Hohlzylinderabschnitt 40 auf, der zu einer Längsseite offen ist mit einer zylinderförmigen äußeren Mantelfläche 41 und einer abgestuften inneren Zylindermantelfläche 42, die sich hier aus drei in Längsrichtung A2 aufeinanderfolgenden zylindrische Mantelflächenabschnitte zusammensetzt, die durch zwei radiale Abstufungen 43, 44 zueinander abgegrenzt sind. An der dem offenen Ende des Hohlzylinderabschnitts 40 gegenüber liegenden Stirnseite schließt sich an die Stirnringfläche 45 ein zur Achse A2 symmetrischer, zylindrischer Fortsatz 46 integral an, der in einer Stirnfläche 47 endet. Etwa in Längsrichtung mittig weist der Fortsatz 46 eine umfänglich geschlossene Spannnut 48 mit einem zylindrischen Nutgrund 48a und zwei die Nut axial beschränkenden Nutseitenflächen 49a, b auf.

In der beschriebenen Ausführungsform ist der Elastomerkörper aus einem reinen Elastomer und einteilig ausgebildet. In einer anderen, nicht dargestellten Ausführungsform kann auch vorgesehen sein, insbesondere im Bereich des Fortsatzes zum Elastomer starre Einlagen vorzusehen zur Einstellung der elastischen Eigenschaften des Elastomerkörpers. Der durch den Hohlzylinderabschnitt 40 bereitgestellte und abgestufte Hohlraum ist bis ein vorgegebenes Übermaß zur Bereitstellung eines Kraftschlusses zwischen Tilgerkörper 3 und Elastomerkörper 4 an die beiden Endabschnitte des Tilgerkörpers und dessen Abstufungen angepasst, d.h. die jeweiligen Abmessungen sind bis auf das angegebene Übermaß im Wesentlichen identisch.

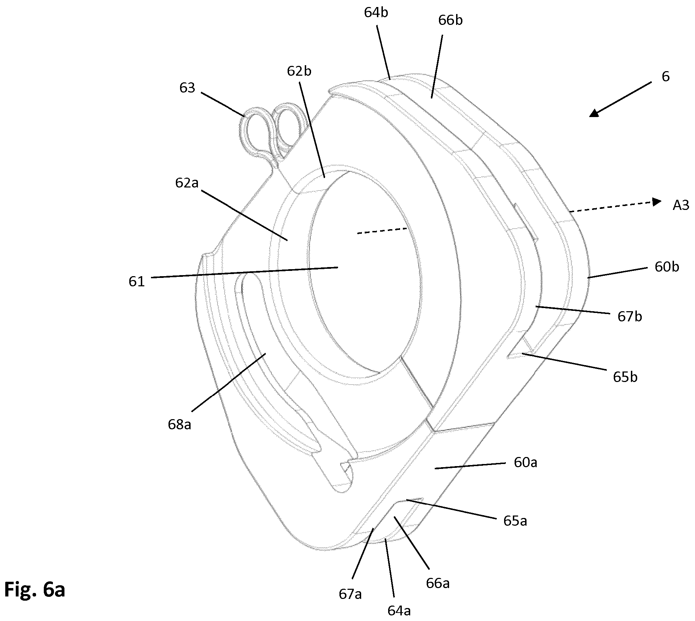

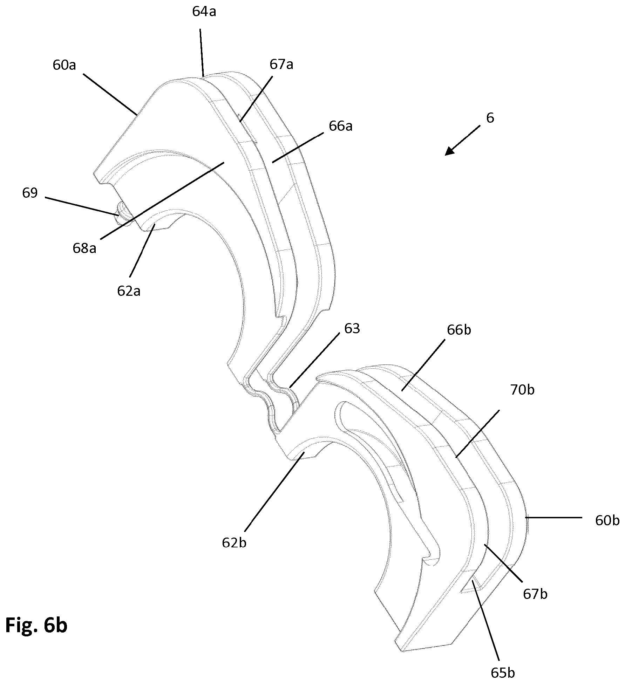

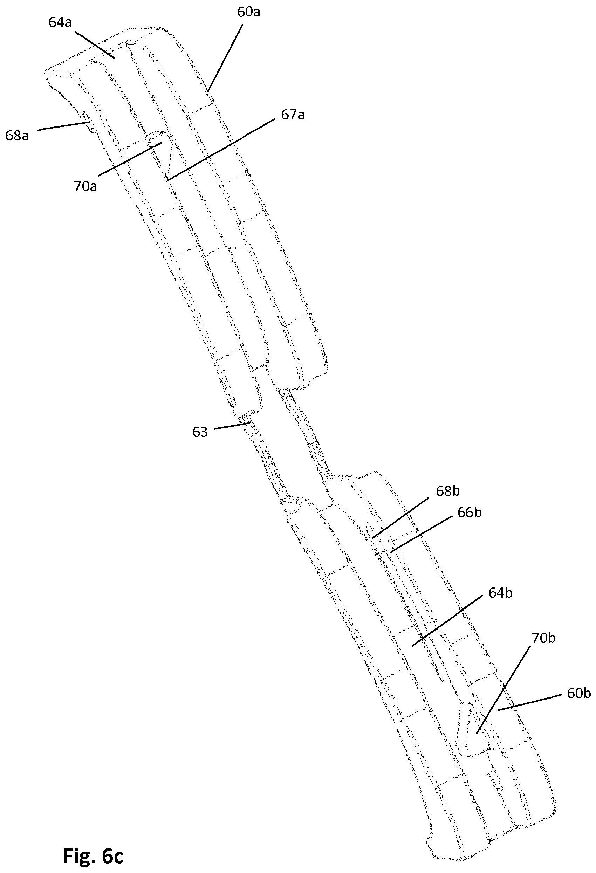

Die Figuren 6a, 6b und 6c zeigen den Aufbau der Einspannelemente 6 in unterschiedlichen Ansichten, Figur 6b in einer Schrägansicht mit voneinander getrennten Schalenhälften, Figur 6c in einer etwa frontalen Unteransicht und Figur 6a in einer Schrägansicht in einem zusammengesetzten Zustand der beiden Schalenhälften. In der beschriebenen Ausführungsform ist das jeweilige Einspannelement 6 schellenartig ausgebildet mit einer zentrischen Durchführung bzw. Bohrung 61, die durch Zusammenfügung der beiden Spannhalbschalen 60a, 60b bereitgestellt ist. In der angegebenen Ausführungsform teilen beide Spannhalbschalen 60a, b die Durchführung mittig, wobei die Spannhalbschalen mittels eines Filmscharniers 63 verliersicher miteinander verbunden und integral in einem Kunststoff-Spitzgießvorgang hergestellt sind. Die die Durchführung 61 begrenzenden Zylinderflächen 62a,b wirken in noch zu beschreibender Weise als Spannflächen für einen zugeordneten Elastomerkörper, wobei jede der beiden Spannhalbschalen eine radial außen und senkrecht zur Achse A3 verlaufende Aufnahmenut 64a, b aufweisen, die im zusammengesetzten Zustand des Einspannelements in Bezug auf ihre Nuterstreckung parallel zueinander verlaufen. Die Aufnahmenuten 64a, b weisen jeweils einen Nutgrund 65a, b sowie zwei die Nut begrenzenden Nutseitenflächen 66a, b bzw. 67a, b auf. Beide Nuten weisen an einer ihrer Seitenflächen jeweils eine über einen Teil der Nuterstreckung verlaufende Ausnehmung auf, wobei in der in Figur 6a angegebenen Darstellung allein die Ausnehmung 68a der Spannhalbschale 60a erkennbar ist, die zugeordnete Ausnehmung 68b in der Spannhalbschale 60b ist in der Figur verdeckt.

Figur 6b zeigt das in Figur 6a angegebene zusammengesetzte Einspannelement in einem ausgeklappten Zustand, bei welchem die beiden Spannhalbschalen 60a, 60b zueinander um 180° im Bereich des Filmscharniers 63 um die Achse A3 gedreht sind. Zur Beschreibung eines weiteren Details in der Gestaltung des Einspannelements 6 in der beschriebenen Ausführungsform eines erfindungsgemäßen Schwingungstilgers sei auf Figur 6c verwiesen, die im Unterschied zur Darstellung der Figur 6b eine frontale Unteransicht auf die voneinander um 180° weggeschwenkten Spannhalbschalen 60a, b zeigt mit direkter Sicht auf die beiden Aufnahmenuten 64a, b. Erkennbar ragt in beide Aufnahmenuten 64a, b jeweils ein Rastelement in Form eines Rastnockens 70a, b ein, der sich von einer jeweiligen Nutseitenfläche 67a, 66b in Richtung auf die gegenüber liegende Nutseitenfläche erstreckt. Aus Figur 6c geht ferner hervor, dass die jeweilige Nutseitenfläche, an welcher der Rastnocken 70a, b angeordnet ist, in Richtung zum jeweiligen Nutgrund 65a, b eine Ausnehmung 68a, b aufweist. In noch zu beschreibender Weise sind die Rastnocken 70a, b mit den jeweiligen Rastausnehmungen 24a, b der Gabelschenkel 23a, b zum Verbinden des Einspannelements mit der Gabelaufnahme verrastbar, wobei die angegebenen Ausnehmungen 68a, b beim Ineingriffbringen der komplementären Rastelemente ein elastisches Auslenken der Nutseitenwand, an welcher der jeweilige Rastnocken angeordnet ist, in axialer Richtung nach außen ermöglicht.

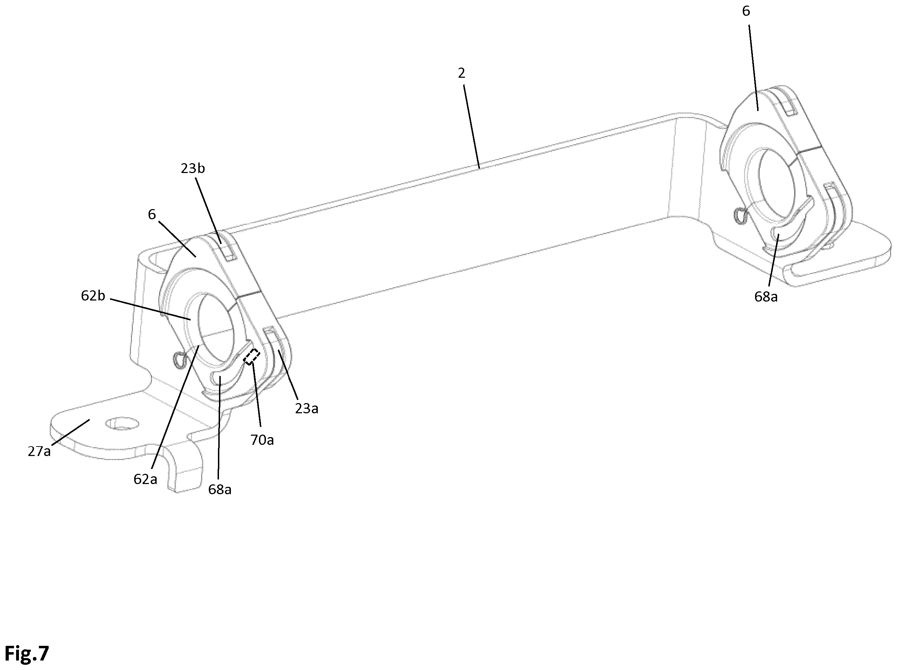

Mit Bezug auf Figur 7 wird im Folgenden die Montage der in den Figuren 1, 2 angegebenen Ausführungsform eines erfindungsgemäßen Schwingungstilgers näher erläutert, wobei zur Klarheit der Darstellung in Figur 7 das Verbundelement, umfassend den Tilgerkörper sowie die beiden endseitig angebrachten Elastomerkörper nicht dargestellt ist. Der erfindungsgemäße Schwingungstilger kann in der in Figur 1 dargestellten Form vormontiert sein, sodass dieser danach durch Anlegen und Befestigen des Trägerelements an dem Bauelement, dessen Schwingungsbewegung vermindert werden soll, sofort einsetzbar ist.

Zur Montage des hier beschriebenen erfindungsgemäßen Schwingungstilgers wird zunächst jeweils ein Elastomerkörper 4 auf die abgestuften Endabschnitte des Tilgerkörpers der Figuren 4a, 4b in Eingriff gebracht, sodass die Elastomerkörper 4 jeweils mit ihrer abgestuften inneren Mantelfläche 42 an der abgestuften äußeren Mantelfläche eines der Endbereiche 31a, b des Tilgerkörpers 3 anliegt. Dabei weisen die Endabschnitte 31a, b des Tilgerkörpers über deren gesamte Mantelfläche ein vorgegebenes Übermaß zu der abgestuften inneren Mantelfläche 42 des Hohlzylinderabschnittes 40 der Elastomerkörper 4 auf. Zur Montage wird der Hohlzylinderabschnitt radial erweitert, über den jeweiligen Endabschnitt des Tilgerkörpers gezogen, danach die nach außen wirkende Kraft entfernt, sodass der Hohlzylinderabschnitt 40 des Elastomerkörpers 4 unter einer vorgegebenen radialen Vorspannung am zugeordneten Endabschnitt 31a, b des Tilgerkörpers 3 anliegt.

Nach der Fertigstellung des Verbundelements können die beiden Einspannelemente 6 der Figuren 6a - 6c an den Fortsatz 46 des Elastomerkörpers 4 angelegt werden. Ausgehend von der in Figur 6b dargestellten, aufgeklappten Anordnung kann eine der beiden Hälften mit ihrer radialen Spannfläche 62a bzw. 62b in die Spannnut 48 des Elastomerkörpers 6 eingelegt werden, derart, dass die Spannfläche 62a, 62b des jeweiligen Einspannelementes 6 am Nutgrund 48a der Spannnut des Elastomerkörpers 4 anliegt. Danach kann die freiliegende Spannhalbschale des Einspannelements um das Filmscharnier 63 zum Schließen der Durchführung 61, siehe Figur 6a bewegt werden, derart, dass der Fortsatz 69 der Spannhalbschale 60a in eine komplementär ausgebildete und in den Figuren nicht sichtbare Bohrung an der Spannhalbschale 60b eingreift, wodurch beide Spannhalbschalen mit ihrem jeweiligen Nutgrund 65a, b am Nutgrund 48a des Elastomerkörpers 4 anliegen. Die beschriebene geschlossene Anordnung der beiden Spannhalbschalen 60a, b der Einspannelemente entspricht der in Figur 6a gezeigten Anordnung, wobei von der Spannfläche 62a, b ausgehende radiale Bereiche in die jeweilige Nut 48 des jeweiligen Elastomerkörpers 4 eingreifen, siehe Figur 5a, b, sodass das jeweilige Einspannelement 6 sowohl in axialer als auch in radialer Richtung am zugeordneten Elastomerkörper 4 anliegt.

Im folgenden Montageschritt wird das Verbundelement mit den beiden angebrachten Einspannelementen zum Trägerelement 2, siehe Figur 3, so ausgerichtet, dass die Gabelaufnahmen 22 einem der Einspannelemente 6 so gegenüberliegen, dass der Gabelschenkel 23b des Trägerelements 2 in die Aufnahmenut 64b des Einspannelementes und der Gabelschenkel 23a in die Aufnahmenut 64a eingreift. Danach erfolgt eine relative Verschiebung von Trägerelement und Verbundelement senkrecht zur Längsachse des Verbundelementes, sodass sich die Gabelschenkel 23a, b weiter in die jeweilige Aufnahmenut hinein erstrecken, bis die jeweilige Spitze des Gabelschenkels an dem jeweiligen Rastnocken 70a, b, siehe Figur 6c anstößt, sodass beim weiteren Vorschieben die den Rastnocken tragende Nutwandung axial elastisch ausgelenkt wird, bis der jeweilige Rastnocken in die jeweilige Rastausnehmung 24a, b des Gabelschenkels 23a, b dadurch einrastet, dass die den jeweiligen Rastnocken 70a, b tragende Nutwandung wieder in ihre Ruhelage zurückschnappt. Diese Verrastungssituation zeigt Figur 7, wobei die Position des innen liegenden Rastnockens zur Verdeutlichung gestrichelt an der Außenseite des unteren Einspannelementes angegeben und mit dem Bezugszeichen 70a bezeichnet ist. Erkennbar ist die bis an die Nut reichende Ausnehmung 68a unterhalb des Rastnockens 70a verlaufend gestaltet, sodass eine axiale Auslenkung beim Zusammenfügen der Bauteile der den Rastnocken tragende Nutwandabschnitt in axialer Richtung ausgelenkt werden kann, um die beschriebene Verrastung von Einspannelement und Trägerelement zu ermöglichen.

In der beschriebenen Ausführungsform weist die durch die halbzylinderförmigen Spannflächen 62a, b gebildete Spannfläche im zusammengesetzten Zustand beider Spannhalbschalen 60a, b sowohl in radialer Richtung als auch in axialer Richtung ein Übermaß zur Spannnut 48 des jeweiligen Elastomerkörpers 4 auf, sodass durch das Ineingriffbringen der Gabelschenkel 23a, b des Trägerelements 2 mit den Aufnahmenuten 64a, b der Einspannelemente 6 ein Presssitz des Elastomerkörpers im Trägerelement realisiert ist, d.h. dass die Spannnut 48 im Elastomerkörper 4 bereitstellende Material ist sowohl in radialer Richtung als auch in axialer bzw. Längsrichtung vorgespannt, um einerseits Spiel im Sitz des Tilgerkörpers am Elastomerkörper und ferner eine der Lebensdauer des Elastomers nicht zuträgliche Dehnung des Materials zu vermeiden.

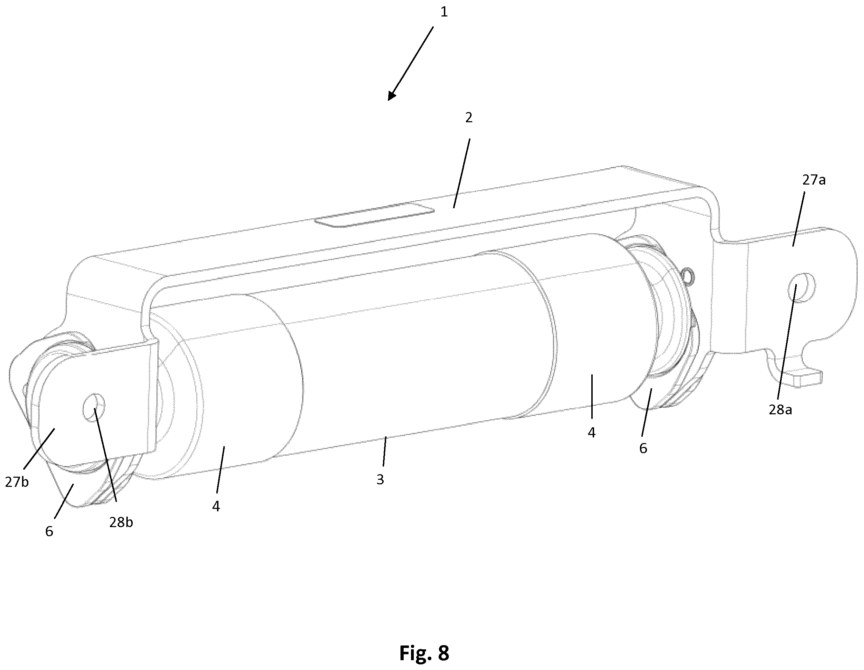

Figur 8 zeigt den erfindungsgemäßen Schwingungstilger gemäß Figur 1 in einer Rückansicht mit Blick auf die Befestigungslaschen 27a, b.

### Bezugszeichenliste

- 1: Schwingungstilger
- 2: Trägerelement
- 3: Tilgerkörper
- 4: Elastomerkörper
- 6: Einspannelement
- 20: Umformblech
- 21: Grundsteg
- 22: Gabelaufnahme
- 23a, b: Gabelschenkel
- 24a, b: Rastausnehmung
- 25a: Schmalfläche
- 26a, b: Stirnfläche
- 27a, b: Befestigungslasche, Anlageflansch
- 28a: Bohrung
- 29a, b: Anlagefläche
- 30: Mittenabschnitt
- 31a, b: Endabschnitt
- 32a, b: Abstufung
- 33a, b: Abstufung
- 34a, b: Abstufung
- 35a, b: Stirnfläche
- 40: Hohlzylinderabschnitt
- 41: Äußere Mantelfläche
- 42: Abgestufte innere Mantelfläche
- 43, 44: Abstufung
- 45: Stirnringfläche
- 46: Fortsatz
- 47: Stirnfläche
- 48: Nut, Spannnut
- 48a: Nutgrund, radiale Einspannfläche
- 49a, b: Nutseitenfläche
- 60a, b: Spannhalbschale, Einspannelementteil
- 61: Durchführung / Bohrung
- 62a, b: Spannfläche
- 63: Filmscharnier
- 64a, b: Aufnahmenut
- 65a, b: Nutgrund
- 66a, b: Nutseitenfläche
- 67a, b: Nutseitenfläche
- 68a, b: Ausnehmung
- 69: Vorsprung
- 70a, b: Rastnocken
- A1, A2 A3: Längsachse
- Z: Schwingungsrichtung

## Patentansprüche

1. Schwingungstilger (1), insbesondere für eine KFZ-Heckklappe, mit einem Trägerelement (2), das über eine Elastomereinrichtung mit einem Tilgerkörper (3) elastisch gekoppelt ist, wobei der Tilgerkörper (3) langgestreckt ausgebildet ist, an dessen Endabschnitten jeweils ein Elastomerkörper (4) mit einem zum Tilgerkörper (3) offenen, kappenartigen Abschnitt angeordnet ist, mit welchem der jeweilige Elastomerkörper (4) den Tilgerkörper (3) übergreift, wobei das Trägerelement (2) beabstandete Aufnahmen zur jeweiligen Aufnahme eines der Elastomerkörper (4) aufweist, **dadurch gekennzeichnet, dass** jeweilige Einspannelemente (6) vorgesehen sind zum Einspannen des jeweiligen Elastomerkörpers (4) in der zugeordneten Aufnahme des Trägerelements (2).

2. Schwingungstilger (1) nach Anspruch 1, **dadurch gekennzeichnet, dass** die jeweilige Aufnahme als Gabelaufnahme (22) ausgebildet ist, welche einer Befestigungsstruktur an dem jeweiligen Elastomerkörper (4) zugeordnet ist und zumindest zwei Gabelschenkel (23a, b) umfasst.

3. Schwingungstilger (1) nach Anspruch 1 oder 2,
**dadurch gekennzeichnet, dass** der Tilgerkörper (3) und die jeweils an einem Endabschnitt des Tilgerkörpers (3) mit diesem verbundenen Elastomerkörper (4) einen Verbundkörper bilden, der in den Aufnahmen des Trägerelements (2) verspannt ist.

4. Schwingungstilger (1) nach Anspruch 2 oder 3,
**dadurch gekennzeichnet, dass** sich an den kappenartigen Abschnitt des jeweiligen Elastomerkörpers (4) an der in Einbaulage des Tilgerkörpers (3) abgewandten Längsseite ein längsseitiger Fortsatz (46) anschließt, der die jeweilige Befestigungsstruktur aufweist zur Einspannung des jeweiligen Elastomerkörpers (4) in dem Trägerelement (2).

5. Schwingungstilger (1) nach Anspruch 2, 3 oder 4,
**dadurch gekennzeichnet, dass** die Befestigungsstruktur des jeweiligen Elastomerkörpers (4) eine umfängliche Nut (48) umfasst zur Bereitstellung von zumindest einer radialen Einspannfläche (48a).

6. Schwingungstilger (1) nach zumindest Anspruch 2,
**dadurch gekennzeichnet, dass** die Einspannelemente (6) jeweils eine Durchführung (61) zur Bereitstellung einer in radialer Richtung wirkenden Spannfläche (62a, b) zur Wechselwirkung mit einer zugeordneten Anlagefläche des Elastomerkörpers (4) und eine jeweilige Aufnahmenut (64a, b) zur Führung und Aufnahme der beiden Gabelschenkel (23a, b) der Gabelaufnahme (22) aufweisen.

7. Schwingungstilger (1) nach Anspruch 6, **dadurch gekennzeichnet, dass** die Einspannelemente (6) zweiteilig ausgebildet sind, wobei jedes der beiden Einspannelementteile (60a, 60b) einem Gabelschenkel (23a, b) der Gabelaufnahme (22) zugeordnet ist, an welchem es befestigt ist.

8. Schwingungstilger (1) nach Anspruch 6 oder 7,
**dadurch gekennzeichnet, dass** die Einspannelemente (6) jeweils im Bereich der die Nutaufnahme festlegenden Begrenzungsflächen ein Rastelement aufweisen zum Verrasten mit einem am zugeordneten Gabelschenkel (23a, b) der Gabelaufnahme (22) angeordneten Rastelement zum Befestigen jedes Einspannelementteils (60a, 60b) an dem zugeordneten Gabelschenkel (23a, b).

9. Schwingungstilger (1) nach Anspruch 8, **dadurch gekennzeichnet, dass** eine die Aufnahmenut (64a, b) festlegende und das Rastelement tragende Begrenzungsfläche des jeweiligen Einspannelements im Bereich eines Nutgrundes (65a, b) der Aufnahmenut eine Ausnehmung (68a, b) aufweist.

10. Schwingungstilger (1) nach einem der Ansprüche 1 bis 9, **dadurch gekennzeichnet, dass** an den Aufnahmen und etwa um 90 Grad versetzt jeweils ein sich in Längsrichtung des Trägerelements (2) erstreckender Anlageflansch (27a, b) zur starren Befestigung des Trägerelements (2) an eine in ihrer Bewegung zu dämpfende Oberfläche ausgebildet ist.

11. Verfahren zur Montage eines Schwingungstilgers (1) umfassend die Schritte:
- Bereitstellen eines langgestreckten Tilgerkörpers (3) mit zwei Längsendabschnitten;
- Bereitstellen zweier Elastomerkörper (4) umfassend jeweils einen kappenartigen Abschnitt;
- Befestigen der Elastomerkörper (4) an den Tilgerkörper (3), sodass ein Verbundelement umfassend den Tilgerkörper (3) und die beiden daran befestigten Elastomerkörper (4) bereitgestellt ist;
- Bereitstellen zweier Einspannelemente (6), die jeweils zwei, insbesondere über ein Filmscharnier verbundene Einspannelementteile aufweisen können;
- Bereitstellen eines Trägerelements (2) mit zwei etwa senkrecht von einem Basisabschnitt und beabstandet zueinander sich erstreckenden Gabelaufnahmen (22) zur jeweiligen Aufnahme eines der Elastomerkörper;
- Einspannen des Verbundelements in Gabelaufnahmen (22) des Trägerelements (2) unter Verwendung der beiden Einspannelemente (6), sodass die Gabelaufnahmen (22) an den jeweiligen Einspannelementen (6) und diese jeweils kraftbeaufschlagt an dem jeweiligen Elastomerkörper (4) zur Bereitstellung eines Presssitzes des Verbundelementes in den Gabelaufnahmen (22) der Trägerelements (2) anliegen, wobei der Schritt des Befestigens der Elastomerkörper (4) an den Tilgerkörper (3), die Schritte umfasst:
- jeweiliges elastisches Erweitern des kappenartigen Abschnitts der beiden Elastomerkörper (4) in radialer Richtung und Aufziehen des kappenartigen Abschnitts des jeweiligen Elastomerkörpers (4) auf einen diesem zugeordneten Längsendabschnitt der Tilgermassse, derart, dass der jeweilige Elastomerkörper (4) den zugeordneten Längsendabschnitt des Tilgerkörpers (3) übergreift.

12. Verfahren zur Montage eines Schwingungstilgers (1) nach Anspruch 11, **dadurch gekennzeichnet, dass** das bereitgestellte Trägerelement ein U-förmiges Trägerelement (2) ist.

13. Verfahren zur Montage eines Schwingungstilgers (1) nach Anspruch 11 oder 12, **dadurch gekennzeichnet, dass** der Schritt des Einspannens des Verbundelements in den Gabelaufnahmen (22) des Trägerelements (2) die Schritte umfasst:
- Anordnen des Verbundelementes zum Trägerelement (2), sodass die Elastomerkörper (4) zur jeweiligen Gabelaufnahme (22) ausgerichtet sind;
- Ausrichten eines als Spannhalbschale (60a, b) ausgebildeten Einspannelemententeils zu einem dieser zugeordneten Gabelaufnahmeschenkel (23a, b) , sodass der jeweilige Gabelaufnahmeschenkel in eine zugeordnete Aufnahmenut (64a, b) der jeweiligen Spannhalbschale (60a, b) eingreift und bewegen der Spannhalbschale (60a, b) senkrecht zur Längsachse (A3) des Verbundelements bis am Elastomerkörper (4) und an der Spannhalbschale (60a, b) angeordnete komplementäre Rastmittel in Eingriff kommen.

## Claims

1. Vibration damper (1), in particular for a vehicle tailgate, comprising a support element (2) elastically coupled to a damper body (3) via an elastomer device, wherein the damper body (3) is elongated, at the end sections of which an elastomer body (4) is arranged with a cap-like section open toward the damper body (3) with which the respective elastomer body (4) engages over the damper body (3), wherein the support element (2) has spaced receptacles for the respective reception of one of the elastomer bodies (4), **characterized in that** respective clamping elements (6) are provided for clamping the respective elastomer body (4) into the assigned receptacle of the support element (2).

2. Vibration damper (1) according to claim 1, **characterized in that** the respective receptacle is designed as a fork-like receptacle (22) which is assigned to a fastening structure on the respective elastomer body (4) and comprises at least two fork legs (23a, b).

3. Vibration damper (1) according to claim 1 or 2, **characterized in that** the damper body (3) and the elastomer bodies (4) which are each connected to the damper body (3) at a respective end section of the damper body (3) form a composite body that is clamped in the receptacles of the support element (2).

4. Vibration damper (1) according to claim 2 or 3, **characterized in that** the cap-like section of the respective elastomer body (4) is adjoined by a longitudinal extension (46) on the longitudinal side facing away in the installed position of the damper body (3), which extension (46) has the respective fastening structure for clamping the respective elastomer body (4) in the support element (2).

5. Vibration damper (1) according to claim 2, 3 or 4, **characterized in that** the fastening structure of the respective elastomer body (4) comprises a circumferential groove (48) for providing at least one radial clamping surface (48a).

6. Vibration damper (1), at least according to claim 2, **characterized in that** the clamping elements (6) each have a passage (61) for providing a clamping surface (62a, b) acting in the radial direction for interaction with an associated contact surface of the elastomer body (4), and a respective receiving groove (64a, b) for guiding and receiving the two fork legs (23a, b) of the fork-like receptacle (22).

7. Vibration damper (1) according to claim 6, **characterized in that** the clamping elements (6) are of two-part design, wherein each of the two clamping element parts (60a, 60b) is assigned to a fork leg (23a, b) of the fork-like receptacle (22) to which is attached.

8. Vibration damper (1) according to claim 6 or 7, **characterized in that** the clamping elements (6) each have a latching element in the region of the boundary surfaces defining the receiving groove for latching with a latching element arranged on the assigned fork leg (23a, b) of the fork-like receptacle (22), for fastening each clamping element part (60a, 60b) to the associated fork leg (23a, b).

9. Vibration damper (1) according to claim 8, **characterized in that** a boundary surface of the respective clamping element which defines the receiving groove (64a, b) and carries the latching element has a recess (68a, b) in the region of a groove bottom (65a, b) of the receiving groove.

10. Vibration damper (1) according to any one of claims 1 to 9, **characterized in that** that, on the receptacles and offset by approximately 90 degrees, a bearing flange (27a, b) extending in the longitudinal direction of the support element (2) is formed for rigidly fastening the support element (2) to a surface whose movement is to be damped.

11. Method for mounting a vibration damper (1), comprising the following steps:
- providing an elongate damper body (3) having two longitudinal end sections;
- providing two elastomer bodies (4), each including a cap-like section;
- fastening the elastomer body (4) to the damper body (3) so as to provide a composite element comprising the damper body (3) and the two elastomer bodies (4) fastened to it;
- providing two clamping elements (6), each of which can have two clamping element parts, in particular connected via a film hinge;
- providing a support element (2) having two fork-like receptacles (22) extending approximately perpendicularly from a base section and at a distance from each other for the respective reception of the elastomer body;
- clamping the composite element into fork-like receptacles (22) of the support element (2) using the two clamping elements (6) so that the fork-like receptacles (22) rest against the respective clamping elements (6) and these rest against the respective elastomer body (4), with a force applied in each case for providing a press fit of the composite element in the fork-like receptacles (22) of the support element (2), wherein the step of fastening the elastomer body (4) to the damper body (3) comprises the steps:
- respective elastic expansion of the cap-like section of the two elastomer bodies (4) in the radial direction and mounting the cap-like section of the respective elastomer body (4) to a longitudinal end section of the damper mass assigned to it in such a way that the respective elastomer body (4) engages over the assigned longitudinal end section of the damper body (3).

12. Method for mounting a vibration damper (1) according to claim 11, **characterized in that** the support element provided is a U-shaped support element (2).

13. Method for mounting a vibration damper (1) according to claim 11 or 12, **characterized in that** the step of clamping the composite element into the fork-like receptacles (22) of the support element (2) comprises the steps:
- arranging the composite element in relation to the support element (2) in such a way that the elastomer bodies (4) are aligned with the respective fork-like receptacle (22);
- aligning a clamping element part designed as a clamping half-shell (60a, b) with one of the legs (23a, b) of the fork-like receptacle so that the respective leg of the fork-like receptacle engages in an assigned receiving groove (64a, b) of the respective clamping half-shell (60a, b), and moving the clamping half-shell (60a, b) perpendicular to the longitudinal axis (A3) of the composite element until complementary latching means arranged on the elastomer body (4) and on the clamping half-shell (60a, b) engage with each other.

## Revendications

1. Amortisseur d'oscillations (1), en particulier pour un hayon de véhicule, comprenant un élément de support (2) couplé de manière élastique à un corps d'amortisseur (3) par l'intermédiaire d'un dispositif en élastomère, dans lequel le corps d'amortisseur (3) est allongé, à l'extrémité duquel est disposé un corps en élastomère (4) avec une partie en forme de capuchon ouverte vers le corps d'amortisseur (3) avec laquelle le corps en élastomère (4) respectif s'engage sur le corps d'amortisseur (3), l'élément de support (2) comportant des logements espacés pour recevoir respectivement l'un des corps en élastomère (4), **caractérisé en ce que** des éléments de serrage (6) sont prévus pour serrer le corps en élastomère (4) correspondant dans le logement associé de l'élément de support (2).

2. Amortisseur d'oscillations (1) selon la revendication 1, **caractérisé en ce que** le logement respectif est conçu comme un logement en forme de fourche (22) qui est associé à une structure de fixation sur le corps en élastomère respectif (4) et comprend au moins deux branches de fourche (23a, b).

3. Amortisseur d'oscillations (1) selon la revendication 1 ou 2, **caractérisé en ce que** le corps d'amortisseur (3) et les corps en élastomère (4) qui sont chacun reliés au corps d'amortisseur (3) au niveau d'une section d'extrémité respective du corps d'amortisseur (3) forment un corps composite qui est serré dans les logements de l'élément de support (2).

4. Amortisseur d'oscillations (1) selon la revendication 2 ou 3, **caractérisé en ce que** la section en forme de capuchon du corps en élastomère (4) est prolongée par un prolongement longitudinal (46) sur le côté longitudinal opposé à la position de montage du corps d'amortisseur (3), lequel prolongement (46) comporte la structure de fixation correspondante pour serrer le corps en élastomère (4) dans l'élément de support (2).

5. Amortisseur d'oscillations (1) selon la revendication 2, 3 ou 4, **caractérisé en ce que** la structure de fixation du corps élastomère respectif (4) comprend une rainure périphérique (48) pour former au moins une surface de serrage radiale (48a).

6. Amortisseur d'oscillations (1), au moins selon la revendication 2, **caractérisé en ce que** les éléments de serrage (6) comportent chacun un passage (61) pour former une surface de serrage (62a, b) agissant dans la direction radiale pour coopérer avec une surface de contact associée du corps en élastomère (4), et une rainure de réception respective (64a, b) pour guider et recevoir les deux branches de fourche (23a, b) du logement en forme de fourche (22).

7. Amortisseur d'oscillations (1) selon la revendication 6, **caractérisé en ce que** les éléments de serrage (6) sont conçus en deux parties, chacune des deux parties d'élément de serrage (60a, 60b) étant associée à une branche de fourche (23a, b) du logement en forme de fourche (22) à laquelle elle est fixée.

8. Amortisseur d'oscillations (1) selon la revendication 6 ou 7, **caractérisé en ce que** les éléments de serrage (6) comportent chacun, dans la zone des surfaces limites définissant la rainure de réception, un élément d'encliquetage destiné à s'encliqueter avec un élément d'encliquetage disposé sur la branche de fourche associée (23a, b) du logement en forme de fourche (22), afin de fixer chaque partie d'élément de serrage (60a, 60b) à la branche de fourche associée (23a, b).

9. Amortisseur d'oscillations (1) selon la revendication 8, **caractérisé en ce qu'**une surface de délimitation de l'élément de serrage respectif qui définit la rainure de réception (64a, b) et porte l'élément d'encliquetage présente un évidement (68a, b) dans la région d'un fond de rainure (65a, b) de la rainure de réception.

10. Amortisseur d'oscillations (1) selon l'une quelconque des revendications 1 à 9, **caractérisé en ce que**, sur les logements et décalée d'environ 90 degrés, une bride d'appui (27a, b) s'étendant dans la direction longitudinale de l'élément de support (2) est formée pour fixer rigidement l'élément de support (2) à une surface dont le mouvement doit être amorti.

11. Procédé de montage d'un amortisseur d'oscillations (1), comprenant les étapes suivantes:
- fournir un corps d'amortisseur allongé (3) comportant deux sections d'extrémité longitudinales;
- fournir deux corps en élastomère (4), chacun comprenant une section en forme de capuchon;
- fixation du corps en élastomère (4) sur le corps d'amortisseur (3) de manière à former un élément composite comprenant le corps d'amortisseur (3) et les deux corps en élastomère (4) fixés à celui-ci;
- fournir deux éléments de serrage (6), dont chacun peut comporter deux parties d'élément de serrage, reliées notamment par une charnière à film;
- fournir un élément de support (2) comportant deux logements en forme de fourche (22) s'étendant approximativement perpendiculairement à partir d'une section de base et à distance l'un de l'autre pour recevoir respectivement le corps en élastomère;
- serrer l'élément composite dans des logements en forme de fourche (22) de l'élément de support (2) à l'aide des deux éléments de serrage (6) de telle sorte que les logements en forme de fourche (22) s'appuient contre les éléments de serrage respectifs (6) et que ceux-ci s'appuient contre le corps en élastomère respectif (4), avec une force appliquée dans chaque cas, pour assurer un ajustement serré de l'élément composite dans les logements en forme de fourche (22) de l'élément de support (2), l'étape de fixation du corps en élastomère (4) au corps d'amortisseur (3) comprenant les étapes suivantes:
- expansion élastique respective de la partie en forme de capuchon des deux corps en élastomère (4) dans la direction radiale et montage de la partie en forme de capuchon du corps en élastomère (4) respectif sur une partie d'extrémité longitudinale de la masse d'amortisseur qui lui est attribuée, de telle sorte que le corps en élastomère (4) respectif s'engage sur la partie d'extrémité longitudinale attribuée du corps d'amortisseur (3).

12. Procédé de montage d'un amortisseur de vibrations (1) selon la revendication 11, **caractérisé en ce que** l'élément de support prévu est un élément de support en forme de U (2).

13. Procédé de montage d'un amortisseur d'oscillation (1) selon la revendication 11 ou 12, **caractérisé en ce que** l'étape consistant à serrer l'élément composite dans les logements en forme de fourche (22) de l'élément de support (2) comprend les étapes suivantes:
- disposer l'élément composite par rapport à l'élément de support (2) de telle sorte que les corps en élastomère (4) soient alignés avec le logement en forme de fourche (22) correspondant;
- aligner une partie d'élément de serrage conçue comme une demi-coque de serrage (60a, b) avec l'une des branches (23a, b) du logement en forme de fourche de telle sorte que la branche respective du logement en forme de fourche s'engage dans une rainure de réception (64a, b) attribuée de la demi-coque de serrage (60a, b) respective, et déplacer la demi-coque de serrage (60a, b) perpendiculairement à l'axe longitudinal (A3) de l'élément composite jusqu'à ce que des moyens de verrouillage complémentaires disposés sur le corps en élastomère (4) et sur la demi-coque de serrage (60a, b) s'engagent les uns dans les autres.
